# EUROPÄISCHE PATENTANMELDUNG

(11) **EP 2 364 960 A1**
(43) Veröffentlichungstag der Anmeldung: **14.09.2011**
(21) Anmeldenummer: 10156388.0
(22) Anmeldetag: 12.03.2010
(51) Int. Cl.: C04B 28/02

(54) **Brandschutzzusammensetzung**

(71) Anmelder: Sika Technology AG, 6340 Baar (CH)
(72) Erfinder: Roth, Kurt, 5018, Erlinsbach (CH); Fabio, Würmli, 8800, Thalwil (CH)
(74) Vertreter: Isler, Jörg

(57) **Zusammenfassung**

Brandschutzzusammensetzung umfassend hydraulisches Bindemittel, 35-65 Gew-% bezogen auf das Gesamtgewicht der Brandschutzzusammensetzung Basalt mit einer durchschnittlichen Partikeigrösse von 0.05-5mm und 3-35 Gew.-% bezogen auf das Gesamtgewicht der Brandschutzzusammensetzung Vermiculit mit einerdurchschnittlichen Partikeigrösse von 0.05-5mm.

## Beschreibung

### Technisches Gebiet

Die Erfindung betrifft das Gebiet der Brandschutzbeschichtungen, das heisst Beschichtungen mit hohen Brandwiderstandeigenschaften für Fertigbauelemente oder Konstruktionen im Hoch- und Tiefbau, insbesondere für Tunnel.

### Stand der Technik

Brandschutzmaterialien für Konstruktionen im Hoch- und Tiefbau sind bekannt. So wird beispielsweise Perlit zementösen Systemen zugegeben, um den Brandwiderstand in einem Brandfall zu optimieren. Der Nachteil solcher Brandschutzmaterialien ist ihre geringe Widerstandsfähigkeit gegenüber mechanischer Druckbelastung. Insbesondere im Tunnelbau sind sie desshalb oft auf eine zusätzliche Schutzbeschichtung, beispielsweise aus Kunstharz, angewiesen.

In der Bauchemie besteht ein grosses Bedürfnis, neue Brandschutzmaterialien bereitzustellen, die brandwiderstandsfähig sind, die einfach zu verarbeiten sind und abrasiven Belastungen sowie Frost/Auftauzyklen standhalten.

### Darstellung der Erfindung

Der vorliegenden Erfindung liegt die Aufgabe zugrunde, eine Brandschutzzusammensetzung bereitzustellen, das einem Brand über längere Zeit widerstehen kann, beständig gegen Abrasion und robust gegen Frost/Auftauzyklen ist.

Erfindungsgemäss wird dies durch die Merkmale des ersten Anspruches erreicht.

Kern der Erfindung ist es also, dass die Brandschutzzusammensetzung hydraulisches Bindemittel, Basalt und Vermiculit umfasst, wobei der Gewichtsanteil an Vermiculit 3 - 35 Gew.-%, bezogen auf das Gesamtgewicht der Brandschutzzusammensetzung, beträgt.

Die Vorteile der Erfindung sind unter anderem darin zu sehen, dass die Brandschutzzusammensetzung nach dem Vermengen mit Wasser im ausgehärteten Zustand eine hohe mechanische Festigkeit, beispielsweise eine hohe Druckfestigkeit nach DIN EN-196-1, aufweist, in aller Regel gemessen nach 28 Tagen. Dadurch wird eine hohe Widerstandsfähigkeit gegen Abrasion erreicht. Abrasive Belastungen können beispielsweise reinigungsbedingt sein, sollten, wie beispielsweise in einem Tunnel, Druckreiniger oder Bürsten zum Einsatz kommen. Weiter ist eine hohe Druckfestigkeit zuträglich, um Beschädigungen durch Stossbelastungen von aussen, wie beispielsweise durch Fahrzeuge in einem Tunnel, vorzubeugen. Weiter wurde eine vorteilhafte Frühfestigkeit gefunden. Von der Frühfestigkeit, typischerweise gemessen als Druckfestigkeit nach DIN EN-196-1 nach einem Tag, ist es abhängig, ab wann mit dem Vortrieb weitergefahren werden kann, und ist daher bestimmend für den Baufortschritt im Tunnelvortrieb.

Weiter weist die Brandschutzzusammensetzung nach dem Vermengen mit Wasser im ausgehärteten Zustand eine hohe Haftung nach EN 1542 auf. Dies ist insbesondere bei der Verwendung der Brandschutzzusammensetzung als Spritzbeton vorteilhaft. Bei der Verwendung als Spritzbeton wurden weiter eine gute Pumpbarkeit und ein tiefer Wasser/ Brandschutzzusammensetzung-Wert gefunden.

Es ist besonders zweckmässig, wenn die Brandschutzzusammensetzung einen Luftporenbildner aufweist. Die dadurch gebildeten Luftporen erlauben ein zusätzliches Ableiten von Wärme.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Weg zur Ausführung der Erfindung

Die vorliegende Erfindung umfasst eine Brandschutzzusammensetzung umfassend hydraulisches Bindemittel, Basalt und Vermiculit, wobei der Gewichtsanteil an Vermiculit 3 - 35 Gew.-%, bezogen auf das Gesamtgewicht der Brandschutzzusammensetzung, beträgt.

Das hydraulisch abbindende Bindemittel umfasst typischerweise ein mineralisches Bindemittel wie z.B. Zement, Gips, Flugasche oder Schlacke, besonders Zement und/oder Gips. Bevorzugte hydraulische Bindemittel umfassen mindestens einen Zement, insbesondere mindestens einen Zement gemäss Euronorm EN 197 oder Calciumsulfat, in Form von Anhydrit, Halbhydrat- oder Dihydratgips; oder Calciumhydroxid. Bevorzugt sind Portlandzemente, Sulfoaluminatzemente und Tonerdeschmelzzemente, insbesondere Portlandzement. Mischungen von Zementen können zu besonders guten Eigenschaften führen. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten. Als Bestandteil des hydraulischen Bindemittels wird Zement, insbesondere Portlandzement, bevorzugt.

Der Gewichtsanteil des hydraulischen Bindemittels beträgt vorzugsweise 10 - 70 Gew.-%, insbesondere 20 - 60 Gew.-%, bevorzugt 30 - 50 Gew.-%, bezogen auf das Gesamtgewicht der Brandschutzzusammensetzung.

Basalte sind dem Fachmann allgemein bekannt und sind beschrieben in CD Römpp Chemie Lexikon, Version 1.0, Georg Thieme Verlag, Stuttgart.

Geeigneter Basalt hat typischerweise eine Dichte von 2.6 - 3.3 g/cm³, insbesondere 2.8 - 3.1 g/cm³. Ferner weist geeigneter Basalt typischerweise eine durchschnittliche Partikelgrösse von 0.05 - 5 mm, insbesondere 0.06 - 4 mm, bevorzugt 0.1 - 3 mm. Vorzugsweise handelt es sich um einen Basalt mit einem Schmelzpunkt von 1000 - 1400 C°, insbesondere 1200 - 1300 C°.

Der Gewichtsanteil des Basalt beträgt vorzugsweise 35-65 Gew.-%, insbesondere 40 - 55 Gew.-%, bevorzugt 44 - 55 Gew.-%, bezogen auf das Gesamtgewicht der Brandschutzzusammensetzung.

Vermiculite sind dem Fachmann allgemein bekannt und sind beschrieben in CD Römpp Chemie Lexikon, Version 1.0, Georg Thieme Verlag, Stuttgart. Geeignetes Vermiculit hat typischerweise eine Schüttdichte von 200- 70 kg/m³, insbesondere 150 - 80 mm, bevorzugt 130- 100 nm. Die durchschnittliche Partikelgrösse beträgt vorzugsweise von 0.05 - 5 mm, insbesondere 0.06 - 4 mm, bevorzugt 0.1 - 3 mm. Geeignetes Vermiculit hat typischerweise einen Schmelzpunkt von 1000 - 1500 C°, insbesondere 1200 - 1400 C°. Insbesondere bevorzugt handelt es sich um expandierten Vermiculit, welcher durch Erwärmen von Rohvermiculit, typischerweise bei Temperaturen von 800 - 1000 °C, erhältlich ist.

Der Gewichtsanteil des Vermiculit beträgt vorzugsweise 5 - 20 Gew.-%, insbesondere 7 - 15 Gew.-%, bevorzugt 10 - 15 Gew.-%, bezogen auf das Gesamtgewicht der Brandschutzzusammensetzung.

Die Brandschutzzusammensetzung kann weiterhin mindestens einen Luftporenbildner, insbesondere einen schüttfähigen pulverförmigen Luftporenbildner, aufweisen.

Dem Fachmann ist der mögliche Einfluss des hydraulischen Bindemittels, insbesondere bedingt durch dessen Granulometrie, Konsistenz sowie der Temperatur, auf die Luftporenbildung nach Vermengung mit Wasser bekannt.

Vorzugsweise führt der Luftporenbildner zu geschlossenen Luftporen mit einer Grösse von 0,02 - 0,30 mm, zu besserer Verarbeitbarkeit und Zusammenhalt und geringer, insbesondere keiner Reduktion der mechanischen Festigkeiten (Druckfestigkeit).

Als Luftporenbildner sind insbesondere Stoffe geeignet, welche in hydraulischen Bindemitteln in Kontakt mit Wasser Luftbläschen, insbesondere Mikroluftbläschen erzeugen.

Als Luftporenbildner sind typischerweise grenzflächenaktiven Substanzen wie anionenaktive, kationenaktive oder nichtionogene Stoffe geeignet.

Bevorzugte Luftporenbildner sind ausgewählt aus der Liste bestehend aus Alkalisalze von Harzsäuren, wie z.B. Betaine, sulfonierte Harzsäuren, wie z.B. Sulfobetaine, Alkylsulfonate, wie z. B. Alkyllaurylsulfonate, Alkylbenzolsulfonate, Alkylethersulfate, Alkylarylethersulfate, Alkansulfonate, Salze von Fettsäuren, Fettsäureamide, Fettsäure-Alkanolamin-Umsetzungsprodukte, Ligninsulfonate, Naphthalinsulfonsäure-Formaldehyd-Polykondensate, Melamin-Fomaldehyd-Sulfit-Polykonsensate und Polycarboxylate. Besonders bevorzugt ist der Luftporenbildner ein Alkylsulfonat, insbesondere Laurylsulfonat.

Luftporenbildner sind beispielsweise bei Sika Schweiz AG kommerziell erhältlich unter dem Namen Fro-V oder SikaAer®.

Der Gewichtsanteil des Luftporenbildners beträgt vorzugsweise 0.05 - 5 Gew.-%, insbesondere 0.075 - 3 Gew.-%, bevorzugt 0.1 - 0.5 Gew.-%, bezogen auf das Gesamtgewicht der Brandschutzzusammensetzung.

Die Brandschutzzusammensetzung kann neben den vorangehend genannten Komponenten weitere Zusatzmittel enthalten. Als Zusatzmittel können beliebige flüssige oder pulverförmige Betonzusatzmittel verwendet werden. Vorteilhaft ist die Verwendung von Beschleunigern, Korrosionsinhibitoren, Verflüssigern, Verdickern, Verzögerern, Schwindreduzierern, Entschäumern, usw. Solche Zusatzmittel, wie Erstarrungsbeschleuniger, Korrosionsinhibitoren, Verflüssiger, usw. sind allgemein bekannt. Für das Spritzen von Beton sind insbesondere Beschleuniger wichtig, welche von Sika® z.B. unter dem Namen Sigunit® vertrieben werden. Als Verflüssiger oder Verzögerer können beispielsweise solche verwendet werden, welche von Sika® z.B. unter dem Namen ViscoCrete® vertrieben werden.

Als Korrosionsinhibitoren können z.B. Alkanolamine, Alkohole, organische Säuren, Phosphonate verwendet werden. Als Alkanolamine sind insbesondere Ethanolamine oder N-alkylierte Ethanolamine geeignet, bevorzugt ausgewählt aus der Gruppe umfassend Monoethanolamin, Diethanolamin, Triethanolamin, N-Methyldiethanolamin, N,N-Dimethylethanolamin sowie Mischungen davon.

Die Brandschutzzusammensetzung kann neben den vorangehend genannten Komponenten weiter Zuschlagstoffe enthalten.

Typische Zuschlagsstoffe wie zum Beispiel Kies, Sand, Quarz, aber auch Blähton, Bims, Polystyrol oder Perlit. Besonders bevorzugte Zuschlagsstoffe für eine Brandschutzbeschichtung sind Perlit, welche die Wärmeleitfähigkeit verbessern.

In einer weiteren bevorzugten Ausführungsform umfasst die Brandschutzzusammensetzung weitere Zusätze mit hohen Brandschutzeigenschaften, wie z.B. Fasern wie Glas- oder Kunststofffasern, insbesondere Polyethylen- oder Polypropylenfasern, andere Kunststoffadditive, oder Calciumsilikate wie z.B. Xonotlit. Insbesondere bevorzugt sind Polyethylen- oder Polypropylenfasern.

Der Gewichtsanteil erwähnter Zusätze mit hohen Brandschutzeigenschaften beträgt vorzugsweise 0.05-2 Gew.-%, insbesondere 0.1 - 0.5 Gew.-%, bezogen auf das Gesamtgewicht der Brandschutzzusammensetzung.

Bevorzugt weist die Brandschutzzusammensetzung 28 Tage nach seiner Vermengung mit Wasser einen Biegezug von 1 - 10 N/mm², insbesondere 2.5 - 10 N/mm², und eine Druckfestigkeit von 2 - 30 N/mm², insbesondere 2 - 13 N/mm², auf.

Die vorhergenannten Werte für den Biegezug und die Druckfestigkeit beziehen sich auf DIN EN-196-1.

Die Haftung der Brandschutzzusammensetzung 28 d nach seiner Vermengung mit Wasser, gemessen nach EN 1542, beträgt vorzugsweise 0.5 - 4 N/mm², insbesondere 0.8 - 4 N/mm².

Es ist weiter von Vorteil, wenn die ausgehärtete Brandschutzzusammensetzung in Anlehnung an die Norm: SIA 262/1: 2003 Anhang C bei Versuchen zur Bestimmung des Frost-Tausalzwiderstandes abgelösten Mengen **m** (in g/m²) von **m** ≤ 2000 g/m², insbesondere von m ≤ 1000 g/m², aufweist.

Das Mischungsverhältnis von Wasser zu Brandschutzzusammensetzung beträgt vorzugsweise 0.8 - 2, insbesondere bevorzugt 1 - 1.6.

Die Brandschutzzusammensetzung kann beispielsweise als Lösung, Dispersion oder pulverförmig vorliegen, wobei es bevorzugt ist, dass die Brandschutzzusammensetzung als Pulver vorliegt und vor der Anwendung mit Wasser vermengt wird.

Des Weiteren betrifft die vorliegende Erfindung eine Verwendung einer Brandschutzzusammensetzung, wie sie vorhergehend beschrieben wurde. Vorteilhaft ist eine Verwendung der Brandschutzzusammensetzung, im mit Wasser vermengten Zustand, als Spritzbeton, Spritzmörtel oder Gussbeton.

Weiter vorteilhaft ist die Verwendung der Brandschutzzusammensetzung als Brandschutzbeschichtung, insbesondere im ausgehärteten Zustand, erhalten nach der Vermischung der Brandschutzzusammensetzung mit Wasser.

Die Brandschutzzusammensetzung und/oder die Brandschutzbeschichtung wird typischerweise für den Hochbau, Tiefbau und Fertigteil-Bau, bevorzugt für den Hoch- und Tiefbau verwendet, insbesondere für Innenbauten von Gebäuden, besonders bevorzugt für den Tunnelbau. Besonders bevorzugt ist die Verwendung einer erfindungsgemässen Brandschutzzusammensetzung oder einer erfindungsgemässen Brandschutzbeschichtung für die Auskleidung von Tunnelinnenwänden bei einem Tunnelneubau oder bei der Renovation eines bereits bestehenden Tunnels. Die Brandschutzzusammensetzung und/oder die Brandschutzschicht kann, typischerweise nach der Vermengung mit Wasser, für die Verwendung in gehärtetem oder noch feuchten Zustand vorliegen. Bevorzugt liegt sie in gehärtetem Zustand vor.

Des Weiteren enthält die vorliegende Erfindung eine Brandschutzbeschichtung umfassend eine Brandschutzzusammensetzung, wie sie vorgehend beschrieben wurde, insbesondere auf einem festen mineralischen Untergrund U.

Als fester mineralischer Untergrund **U** eignen sich besonders Felsgestein, Mauerwerke oder Betonkonstruktionen wie z.B. Betonmauern, Betonsäulen oder insbesondere Betonplatten, die z.B. für die Auskleidung von Tunnelwänden verwendet werden. Als Untergrund eignet sich insbesondere auch eine Schicht aus Spritzbeton, die z.B. zur Sicherung von Felsgestein aufgetragen wurde.

Als mineralischer Untergrund **U** kommt vorzugsweise natürlich vorkommendes Gestein, eine Mauer oder Beton in Frage, insbesondere Betonplatten oder eine Betonbeschichtung besonders in Form von Spritzbeton, wie sie zum Beispiel für den Tunnelbau verwendet werden.

In einem weiteren Aspekt betrifft die vorliegende Erfindung ein Verfahren zur Herstellung einer Brandschutzbeschichtung umfassend eine Brandschutzzusammensetzung, wie es vorhergehend beschrieben wurde, wobei insbesondere die Brandschutzzusammensetzung mit Wasser vermengt wird und im nassen Zustand auf einen Untergrund, insbesondere einen festen mineralischen Untergrund **U**, appliziert wird.

Bevorzugt ist ein Verfahren, bei dem die mit Wasser vermengte Brandschutzzusammensetzung im Spritzgussverfahren auf einen Untergrund, insbesondere einen festen mineralischen Untergrund **U**, appliziert wird.

Die Brandschutzzusammensetzung wird mit Wasser vermengt und wird noch im nassen Zustand auf den Untergrund aufgetragen. Entweder wird die mit Wasser vermengte Brandschutzzusammensetzung direkt auf den Untergrund aufgetragen, oder eine weitere Schicht 1, wie z.B. ein Primer, wird zuerst auf den Untergrund aufgetragen und danach wird die mit Wasser vermengte Brandschutzzusammensetzung auf die weitere Schicht 1 aufgetragen. Die Schicht aus mit Wasser vermengter Brandschutzzusammensetzung ist bevorzugt ein Spritzbeton oder Spritzmörtel, der entweder im Trocken- oder im Nassverfahren auf den Untergrund oder die weitere Schicht 1 aufgetragen werden kann. Im Trockenverfahren wird die Brandschutzzusammensetzung erst mit dem Wasser vermischt kurz bevor es die Spritzdüse verlässt. Im Nassverfahren wird die Brandschutzzusammensetzung mit Wasser vor dem Spritzen vermischt. Bevorzugt ist das Nassspritzverfahren.

Der Primer der Schicht 1 kann ein zementöser Primer sein oder ein organischer Primer. Beim organischen Primer werden insbesondere Primer mit Alkoxygruppen aufweisenden Silane als Haftvermittlersubstanzen bevorzugt.

Unter einem Primer wird ein Voranstrich verstanden, welcher auf einen Untergrund appliziert wird und nach einer gewissen Wartezeit nach der Applikation, der so genannten Ablüftezeit, von einer Beschichtung überdeckt wird und dazu dient, die Haftung der Beschichtung auf dem betreffenden Untergrundoberfläche zu verbessern.

Bevorzugt ist andererseits ein Verfahren, bei dessen Untergrund es sich um eine Gussformteil, insbesondere zur Herstellung von Fertigbauteilen bestehend aus Brandschutzzusammensetzung, oder ein Fertigteil-Element handelt, wie beispielsweise Türenelemente, Dachabdeckungen, Wand-, Boden- oder Deckenelemente.

Die Herstellung von Fertigbauteilen oder Fertigteil-Elementen erfolgt vorzugsweise durch Gießen oder Filterpressen.

### Beispiele

Die Erfindung wird nun anhand von Beispielen näher erläutert. Diese sollen die Erfindung weiter veranschaulichen, den Umfang der Erfindung aber in keiner Weise beschränken.

Es wurden unterschiedliche Brandschutzzusammensetzungen ***Z1-Z10*** bestehend aus den Inhaltsstoffen in Gewichtsteilen gemäss den Angaben in Tabelle 1 hergestellt. Die Zusammensetzung ***Ref1*** stellt ein Vergleichsbeispiel dar.

### Verwendete Rohstoffe:

| | |
|---|---|
| "*Zement"* | Portlandzement, CEM 1 |
| "*Basalt"* | Basalt, durchschnittliche Partikelgrösse von 0.2 - 2.2 mm |
| "*Vermiculit"* | Vermiculit, durchschnittliche Partikelgrösse von 0.4 - 2 mm |
| "*Luftporenbildner"* | Natriumlaurylsulfat |
| "*Thixotropiermittel"* | Cellulose |
| "*Kunststofffaser"* | Polypropylen-Fasern von 3 mm Länge |

### Herstellung der Zusammensetzungen

Gemäss den Mengen in der Tabelle 1 wurden die Rohstoffe für die Brandschutzzusammensetzungen ***Z1-Z10*** sowie für das Vergleichsbeispiel ***Ref1*** nach Zugabe des Anmachwassers in einem Hobardmischer für 3 min gemischt. Die Menge an zugegebenen Anmachwasser ist aufgrund des in Tabelle 1 angegebenen Mischverhältnisses (**MV**) von Anmachwasser zu der Summe der Rohstoffe der Zusammensetzung (**MV**: (Wasser/Zusammensetzung)) ersichtlich. Der Wert 1:2.82 bedeutet also, dass 1 Gewichtsteil Anmachwasser pro 2.82 Gewichtteile der betreffenden Zusammensetzung zugegeben wurde. Dem Vergleichsbeispiel wurde Flugasche zugegeben, um dessen Verarbeitbarkeit zu erhöhen.

Von den diversen Zusammensetzungen wurden Prismen in der Grösse 4 cm x 4 cm x 16 cm gegossen. Bei 23°C und 50% rel. Luftfeuchtigkeit wurde nach 1, 7 und 28 Tagen (d) die Druckfestigkeit gemäss der Norm DIN EN 196-1 bestimmt (siehe Tabelle 2, DF).

Von den diversen Brandschutzzusammensetzungen wurden Prismen in der Grösse 4 cm x 4 cm x 16 cm gegossen. Bei 23°C und 50% rel. Luftfeuchtigkeit wurde nach 1, 7 und 28 Tagen (d) der Biegezug gemäss der Norm DIN EN 196-1 bestimmt (siehe Tabelle 2, BZ).

Von den diversen Brandschutzzusammensetzungen wurden Prismen in der Grösse 4 cm x 4 cm x 16 cm gespritzt (Spritzgussverfahren). Bei 23°C und 50% rel. Luftfeuchtigkeit wurde nach 28 Tagen (d) die Haftung gemäss der Norm DIN EN 1542 bestimmt (siehe Tabelle 2, *Haftung*).

In Anlehnung an die Norm: SIA 262/1: 2003 Anhang C wurden mit den Brandschutzzusammensetzungen ***Z1, Z3, Z5, Z7,* Z9** und ***Z10*** Versuche zur Bestimmung des Frost-Tausalzwiderstandes durchgeführt. Aus den Brandschutzzusammensetzungen ***Z1,* Z3, *Z5, Z7,* Z9** und ***Z10*** wurden Probenkörper mit einer Grösse von 15 cm x 15 cm x 15 cm hergestellt, die abgelösten Mengen **m** sind in Tabelle 2 in g/m² aufgeführt. Eine Menge von **m** ≤ 200 g/m² bedeutet eine hohe Frost-Tausalzbeständigkeit, eine Menge von **m** ≥ 3800 g/m² bedeutet eine tiefe Frost-Tausalzbeständigkeit, während Werte dazwischen eine mittlere Frost-Tausalzbeständigkeit bedeuten. Aus Tabelle 2 ist ersichtlich, dass die Brandschutzzusammensetzungen ***Z5*** und ***Z10*** eine hohe Frost-Tausalzbeständigkeit, während die Brandschutzzusammensetzungen ***Z1, Z3, Z7*** und ***Z9*** eine mittlere Frost-Tausalzbeständigkeit aufweisen.

Mit Prüfkörpern umfassend die Brandschutzzusammensetzungen ***Z1,*** respektive ***Z9*** oder ***Z10*** wurden Brandversuche in Anlehnung an die RWS-Normbrandkurve durchgeführt. Die Zusammensetzungen wurden im Betonspritzverfahren einseitig auf Betonplatten der Grösse von 180 cm x 160 cm x 30 cm aufgebracht, bis die aufgespritzte Schicht der Brandschutzbeschichtungen ***Z1,*** resp. ***Z9*** oder ***Z10,*** eine Dicke von 3 cm hatte. Danach wurden die so hergestellten Prüfkörper für 28 Tage bei 20°C gelagert.

Danach wurden die Prüfkörper auf der Oberseite, d.h. an der Seite mit der aufgespritzten Zusammensetzung, für 120 Minuten einer Flamme aus einem Ölbrenner (ELCO EL 4.140 P) ausgesetzt. Die Temperatur an der Oberfläche der Oberseite des Prüfkörpers bei der Ölflamme betrug, in Anlehnung an die RWS-Heizkurve, maximal 1350 °C.

Mit Temperaturfühlern (nach Einbringen vermörtelt) wurde der Temperaturverlauf innerhalb der aufgespritzten Zusammensetzung (4 Temperaturfühler) und am Interface der aufgespritzten Zusammensetzung mit der Betonplatte (2 Temperaturfühler) über 120 Minuten aufgezeichnet. Die Daten wurden auf einen Datenlogger (erhältlich bei Tectron Systems AG, Bubikon, Schweiz) übertragen, mit dem die Temperaturfühler verbunden waren.

Wie in Tabelle 2 ersichtlich, konnte bei keinem der Prüfkörper ein Abplatzen der aufgespritzten Zusammensetzung festgestellt werden. Weiter sind in Tabelle 2 die Temperatur-Mittelwerte aus 480 Messwerten der 6 Temperaturfühler angegeben.

**Tabelle 1 Inhaltsstoffe der Brandschutzbeschichtungen Z1-Z10 und dem Vergleichsbeispiel Ref1 in Gewichtsteilen.**

| **Rohstoffe** | ***Z1*** | ***Z2*** | ***Z3*** | ***Z4*** | ***Z5*** | ***Z6*** |
|---|---|---|---|---|---|---|
| *Zement* | 40 | 40 | 40 | 40 | 40 | 40 |
| *Basalt* | 49.65 | 49.65 | 52.15 | 52.15 | 54.65 | 54.65 |
| *Vermiculit* | 10 | 10 | 7.5 | 7.5 | 5 | 5 |
| *Luftporenbildner* | 0.2 | - | 0.2 | - | 0.2 | - |
| Weisskalkhydrat | - | - | - | - | - | - |
| Flugasche | - | - | - | - | - | - |
| Tylose | 0.15 | 0.15 | 0.15 | 0.15 | 0.15 | 0.15 |
| Kunststofffasern | - | - | - | - | - | - |
| Summe | 100 | 100 | 100 | 100 | 100 | 100 |
| **MV**: (Wasser/Zusammen-setzung) | 1:2.82 | 1:3.15 | 1:3.13 | 1:3.44 | 1:4.10 | 1:4.37 |

| **Rohstoffe** | ***Z7*** | **Z8** | ***Z9*** | ***Z10*** | ***Ref1*** | |
|---|---|---|---|---|---|---|
| *Zement* | 40 | 40 | 40 | 40 | 49.96 | |
| *Basalt* | 49 | 49 | 49.45 | 46.45 | - | |
| *Vermiculit* | 7.15 | 7.15 | 10 | 13 | 40 | |
| *Luftporenbildner* | 0.2 | - | 0.2 | 0.2 | 0.04 | |
| Weisskalkhydrat | 7.5 | 7.5 | - | - | - | |
| Flugasche | - | - | - | - | 10 | |
| Tylose | 0.15 | 0.15 | 0.15 | 0.15 | 1.2 | |
| Kunststofffasern | - | - | 0.2 | 0.2 | - | |
| Summe | 100 | 100 | 100 | 100 | 100 | |
| **MV**: (Wasser/Zusammen-setzung) | 1:2.86 | 1:3.08 | 1:3.47 | 1:3.21 | 1:0.91 | |

**Tabelle 2 Resultate, n.m. = nicht messbar, n.a. = keine Messung vorhanden.**

| **Versuch** | ***Z1*** | ***Z2*** | ***Z3*** | ***Z4*** | ***Z5*** | ***Z6*** |
|---|---|---|---|---|---|---|
| ***BZ*/*****DF** 1d [Nlmm²]* | 0.8/2.1 | 1.3/3.6 | 1.0/2.7 | 1.4/3.7 | 1.7/4.6 | 2.1/7.1 |
| *BZ*/*DF 7d [N*/*mm²]* | 2.4/6.5 | 3.2/12.2 | 2.7/9.0 | 3.4/14.1 | 3.8/16.9 | 4.3/22.5 |
| *BZ*/*DF 28d [Nlmm²]* | 2.9/6.5 | 3.9/13.9 | 3.7/10.5 | 4.7/16.6 | 5.3/20.7 | 5.7/24.2 |
| *Haftung* 28d *[Nlmm²]* | 0.9 | 1.49 | 1.61 | 1.9 | 1.13 | 1.96 |
| m *[glm²]* | 700 | n.a. | 500 | n.a. | 90 | n.a. |
| Abplatzen | nein | nein | n.a. | n.a. | n.a. | n.a. |
| Temperatur Mittelwert *[C°]* | 408 | n.a. | n.a. | n.a. | n.a. | n.a. |

| **Versuch** | ***Z7*** | ***Z8*** | ***Z9*** | ***Z10*** | ***Ref1*** | |
|---|---|---|---|---|---|---|
| ***BZ*/*****DF** 1d [Nlmm²]* | 1.2/3.2 | 1.5/4.2 | 1.1/2.4 | 1.2/2.6 | n.m. | |
| ***BZ*/*****DF** 7d* [*Nlmm²]* | 2.7/9.3 | 2.7/10.8 | 2.9/10.8 | 2.9/10.1 | 0.6/1.2 | |
| *BZ*/*DF 28d* [*Nlmm²]* | 3.5/10.2 | 3.7/12.0 | 4.12.9 | 3.9/12 | 0.9/1.6 | |
| *Haftung* 28d [*Nlmm²]* | 1.42 | 1.53 | 1.60 | 1.59 | 0.3 | |
| m [*glm²]* | 1400 | n.a. | 300 | 100 | n.a. | |
| Abplatzen | n.a. | n.a. | nein | nein | n.a. | |
| Temperatur Mittelwert *[C°]* | n.a. | n.a. | 442 | 339 | n.a. | |

Selbstverständlich ist die Erfindung nicht auf die gezeigten und beschriebenen Ausführungsbeispiele beschränkt.

## Patentansprüche

1. Brandschutzzusammensetzung umfassend hydraulisches Bindemittel, Basalt und Vermiculit, wobei der Gewichtsanteil an Vermiculit 3 - 35 Gew.-%, bezogen auf das Gesamtgewicht der Brandschutzzusammensetzung, beträgt.

2. Brandschutzzusammensetzung gemäss Anspruch 1, **dadurch gekennzeichnet, dass** das hydraulische Bindemittel Zement und/oder Gips ist.

3. Brandschutzzusammensetzung gemäss Anspruch 1 oder 2, **dadurch gekennzeichnet, dass** der Gewichtsanteil des hydraulischen Bindemittels 10 - 70 Gew.-%, insbesondere 20 - 60 Gew.-%, bevorzugt 30 - 50 Gew.-%, bezogen auf das Gesamtgewicht der Brandschutzzusammensetzung, beträgt.

4. Brandschutzzusammensetzung gemäss einem der vorhergehenden Ansprüche, **dadurch gekennzeichnet, dass** der Basalt eine durchschnittliche Partikelgrösse von 0.05 - 5 mm, insbesondere 0.06 - 4 mm, bevorzugt 0.1 - 3 mm aufweist.

5. Brandschutzzusammensetzung gemäss einem der vorhergehenden Ansprüche, **dadurch gekennzeichnet, dass** der Gewichtsanteil an Basalt 35-65 Gew.-%, insbesondere 40 - 55 Gew.-%, bevorzugt 44 - 55 Gew.-%, bezogen auf das Gesamtgewicht der Brandschutzzusammensetzung, beträgt.

6. Brandschutzzusammensetzung gemäss einem der vorhergehenden Ansprüche, **dadurch gekennzeichnet, dass** das Vermiculit eine Partikelgrösse von 0.05 - 5 mm, insbesondere 0.06 - 4 mm, bevorzugt 0.1 - 3 mm aufweist.

7. Brandschutzzusammensetzung gemäss einem der vorhergehenden Ansprüche, **dadurch gekennzeichnet, dass** der Gewichtsanteil an Vermiculit 5 - 20 Gew.-%, insbesondere 7 - 15 Gew.-%, bevorzugt 10 - 15 Gew.-%, bezogen auf das Gesamtgewicht der Brandschutzzusammensetzung, beträgt.

8. Brandschutzzusammensetzung gemäss einem der vorhergehenden Ansprüche, **dadurch gekennzeichnet, dass** die Brandschutzzusammensetzung zusätzlich mindestens einen Luftporenbildner, insbesondere einen schüttfähigen Luftporenbildner, aufweist.

9. Brandschutzzusammensetzung gemäss Anspruch 8, **dadurch gekennzeichnet, dass** es sich bei dem Luftporenbildner um ein Alkylsulfonat handelt.

10. Brandschutzzusammensetzung gemäss einem der vorhergehenden Ansprüche, **dadurch gekennzeichnet, dass** die Brandschutzzusammensetzung zusätzlich Glas- oder Kunststofffasern, insbesondere Polyethylen- oder Polypropylenfasern, aufweist.

11. Verwendung von einer Brandschutzzusammensetzung gemäss einem der vorhergehenden Ansprüche als Brandschutzbeschichtung, insbesondere im Hoch- und Tiefbau.

12. Brandschutzbeschichtung umfassend eine Brandschutzzusammensetzung gemäss einem der Ansprüche 1 - 10, insbesondere auf einem festen mineralischen Untergrund U.

13. Verfahren zur Herstellung einer Brandschutzbeschichtung umfassend eine Brandschutzzusammensetzung nach einem der Ansprüche 1 - 10.

14. Verfahren gemäss Anspruch 13, **dadurch gekennzeichnet, dass** die Brandschutzzusammensetzung mit Wasser vermengt wird und im nassen Zustand auf einen Untergrund appliziert wird.

15. Verfahren gemäss Anspruch 14, **dadurch gekennzeichnet, dass** die mit Wasser vermengte Brandschutzzusammensetzung im Spritzgussverfahren auf den Untergrund appliziert wird.
